# EUROPÄISCHE PATENTSCHRIFT

(11) **EP 2 195 618 B1**
(45) Veröffentlichungstag und Bekanntmachung des Hinweises auf die Patenterteilung: **31.05.2017**
(21) Anmeldenummer: 08786511.9
(22) Anmeldetag: 28.07.2008
(51) Int. Cl.: G01D 21/00

(54) **MESSVORRICHTUNG**
MEASURING DEVICE
DISPOSITIF DE MESURE

(30) Priorität: 28.09.2007 DE 102007046645
(43) Veröffentlichungstag der Anmeldung: 16.06.2010
(73) Patentinhaber: Robert Bosch GmbH, 70442 Stuttgart (DE)
(72) Erfinder: KRAPF, Reiner, 72770 Reutlingen (DE); BRAUN, Heiko, 70178 Stuttgart (DE); MAHLER, Michael, 70771 Leinfelden-Echterdingen (DE); WIELAND, Christoph, 70563 Stuttgart-Vaihingen (DE); HOFFMANN, Ulli, 75223 Niefern-Oeschelbronn (DE)
(86) Internationale Anmeldenummer: PCT/EP2008/059870
(87) Internationale Veröffentlichungsnummer: WO 2009/043618

(56) Entgegenhaltungen:
- WO-A-02/086536
- WO-A-2005/116683
- WO-A1-02/44750
- WO-A1-99/12053
- DE-A1-102005 052 369

## Beschreibung

### Stand der Technik

Die Erfindung geht aus von einer Messeinrichtung nach dem Oberbegriff des Anspruchs 1 und dem unabhängigen Anspruch 15. Es ist bereits eine Messvorrichtung für eine Werkzeugmaschine und/oder ein Handmessgerät bekannt. Die Messvorrichtung weist eine Messeinheit, die zu einer Messung vorgesehen ist, und eine Fremdsignaleinheit auf.

Aus der DE 10 2005 052 369 A1, ist ein Messgerät mit einer Sendeeinheit zum Senden eines in einem Frequenzbereich liegenden Messsignals, mit einer Sensoreinheit zum Empfangen eines vom Messsignal angeregten Auswertesignals und einer Steuereinheit zum Auswerten des Auswertesignals in ein Messergebnis bekannt. Darüber hinaus ist die Steuereinheit der Vorrichtung der DE 10 2005 052 369 A1 dazu vorgesehen, den Frequenzbereich vor einem Senden des Messsignals auf ein vom Messsignal unabhängiges Signal zu untersuchen. Hierzu wird ein von der Sensoreinheit empfangenes Signal auf ein Information tragendes Signal untersucht, wobei das Hintergrundsignal nicht als solches identifiziert wird. Wird in einer Prüfung kein solches Information tragendes Signal erkannt, so wird ein Senden des Messsignals mit Hilfe der Sendeeinheit veranlasst, wobei gegebenenfalls vorher das Störbeseitigungsmittel aktiviert wird. Das Auswertesignal wird empfangen und ausgewertet und entsprechende Daten oder Grafiken werden auf der Anzeigeeinheit dargestellt. Dabei ist es vorrangige Aufgabe der Vorrichtung der DE 10 2005 052 369 A1 ein störsignalfreies Messsignal, bzw. ein von einem Störsignal befreites Messsignal zu generieren, um eine zuverlässige Auswertung des Messsignals zu gewährleisten. Da das Messsignal der Vorrichtung der DE 10 2005 052 369 A1 gepulst ist, besitzt die Vorrichtung eine Pulsuntersuchung, die das Stör- oder Fremdsignal daraufhin untersucht, ob dieses ein gepulstes Signal ist. Für den Fall, dass das Signal ein gepulstes Signal ist, wird in einer Messsignalanpassung ein Modus gestartet, der ein späteres eventuelles Aussenden des Messsignals, beispielsweise zwischen den Pulsen des Signals, veranlasst. Bei einem nicht pulsförmigen Signal wird von der Steuereinheit eine Eigenschaftserkennung von Material in der Umgebung der Sendeeinheit gestartet, beispielsweise eine Dämpfungsmessung, eine Reflexionsmessung oder eine Materialerkennung, und hierfür mit Hilfe eines sehr leistungsschwachen Prüfsignals, das bis auf seine geringe Leistung mit dem Messsignal vergleichbar ist, das Material der Wand untersucht. Ein entsprechendes Untersuchungsergebnis wird in der Steuereinheit hinterlegt.

### Vorteile der Erfindung

Die Erfindung geht aus von einer Messvorrichtung, insbesondere für eine Werkzeugmaschine und/oder ein Handmessgerät, mit einer Messeinheit, die zu einer Messung vorgesehen ist, und einer Fremdsignalerkennungseinheit.

Es wird vorgeschlagen, dass die Fremdsignalerkennungseinheit zu einer Erkennung eines Fremdsignals während und/oder vor einer Messung der Messeinheit vorgesehen ist. In diesem Zusammenhang soll unter "vorgesehen" insbesondere speziell ausgestattet, ausgelegt und/oder programmiert verstanden werden. Durch die erfindungsgemäße Ausgestaltung der Erfindung kann ein vorteilhafter Schutz, eines Fremdsignals eines aktiven Dienstes, wie beispielsweise eine Flugüberwachung, ein UMTS-Sender usw., vor einer Störung durch die Messeinheit geschützt werden und/oder es können Bauteile der Messeinheit, insbesondere ein Sensorelement und/oder eine Empfängerelement, vor einer Störung bzw. vor dem Fremdsignal und/oder einer Überlastung zumindest teilweise geschützt werden. Vorteilhafterweise entspricht ein zu überwachender Frequenzbereich der Fremdsignalerkennungseinheit einer Messfrequenz bzw. einem Messspektrum der Messeinheit. Insbesondere kann mittels der Messeinheit eine Messfrequenz bzw. ein Messspektrum auf einen Frequenzbereich geändert werden, der bei Vorliegen eines Fremdsignals von einer Fremdsignalfrequenz bzw. einem Fremdsignalspektrum ausgespart ist. Vorzugsweise weist die Messeinheit eine Ultrabreitbandeinheit auf, die zu einer Ultrabreitbandmessung vorgesehen ist, wobei die Ultrabreitbandeinheit ein Ultrabreitbandsignal aussendet und/oder detektiert. Dabei soll unter einem "Ultrabreitbandsginal (oder Ultra Wide Band Signal oder UWB-Signal)" insbesondere ein elektromagnetisches Signal verstanden werden, welches einen Nutzfrequenzbereich mit einer Mittelfrequenz im Frequenzbereich von 1 GHz bis 15 GHz und einer Frequenzbandbreite von zumindest 500 MHz aufweist.

Des Weiteren wird vorgeschlagen, dass die Fremdsignaleinheit zumindest eine Impulssignaldetektoreinheit aufweist, die zu einer Detektion eines Impulsfremdsignals vorgesehen ist, wodurch vorteilhaft eine gezielte Suche bzw. Detektion nach insbesondere periodischen, gepulsten Fremdsignalen, wie beispielsweise Signale einer Flugsicherung, erreicht und damit ein hoher Sicherheitsstandard für Dienste mit gepulsten Signalen erreicht werden kann. In diesem Zusammenhang soll unter einem "Impulsfremdsignal" insbesondere ein periodisches, gepulstes Fremdsignal verstanden werden, deren Periodendauer bis zu zwölf Sekunden betragen kann. Vorzugsweise ist das Impulsfremdsignal von einem Radarsignal gebildet. Die Impulssignaldetektoreinheit wird vorzugsweise mittels einer Diodenschaltung, wie beispielsweise einer Schottkydiodenschaltung und/oder einer Tunneldiodenschaltung, realisiert.

Weist zudem die Messeinheit zumindest einen Sensorempfänger auf, der zumindest teilweise einstückig mit der Impulssignaldetektoreinheit ist, können vorteilhaft weitere Bauteile, Bauraum, Montageaufwand und Kosten eingespart werden. In diesem Zusammenhang soll unter "einstückig" insbesondere einteilig, aus einem Guss hergestellt und/oder als ein Bauteil, insbesondere als ein integriertes Bauteil ausgebildet verstanden werden. Unter einem "Sensorempfänger" soll dabei insbesondere ein Detektorelement zum Detektieren eines Messsignals verstanden werden.

Es wird ferner vorgeschlagen, dass die Fremdsignalerkennungseinheit zumindest eine Dauersignaldetektoreinheit aufweist, die zu einer Detektion von Dauerfremdsignalen vorgesehen ist, wodurch eine von einem Messsignal bzw. von Impulsfremdsignalen unabhängige Detektion von Dauerfremdsignalen erzielt werden kann. Dabei soll unter einem "Dauerfremdsignal" insbesondere ein kontinuierlich ausgesendetes Fremdsignal verstanden werden, wie beispielsweise ein UMTS-Signal. Vorzugsweise weist die Dauersignaldetektoreinheit einen Breitbandempfänger auf, der über einen eingestellten Frequenzbereich eine empfangene Leistung ermittelt.

Eine insbesondere Platz sparende Anordnung der Messeinheit und zumindest teilweise der Fremdsignalerkennungseinheit auf einem Halbleiterchip kann vorteilhaft erreicht werden, wenn die Messeinheit zumindest einen Sensorempfänger aufweist, der zumindest teilweise einstückig mit der Dauersignaldetektoreinheit ausgebildet ist.

In einer weiteren Ausgestaltung der Erfindung wird vorgeschlagen, dass die Fremdsignalerkennungseinheit zumindest ein Antennenelement aufweist, das zu einem Empfangen des Fremdsignals vorgesehen ist, wodurch vorteilhaft ein von der Messeinheit unabhängiges Empfangen eines Fremdsignals erreicht und damit eine unerwünschte Schwächung eines empfangenen Signal, wie beispielsweise durch eine Signalteilung, erzielt werden kann.

Weiterhin wird vorgeschlagen, dass die Impulssignaldetektoreinheit und/oder die Dauersignaldetektoreinheit das Antennenelement aufweist, wodurch eine Sensitivität des Antennenelements vorteilhaft an ein Fremdsignal angepasst werden kann.

Weitere Bauteile, Bauraum, Montageaufwand und Kosten können vorteilhaft eingespart werden, wenn die Messeinheit eine Antenneneinheit zum Empfangen und/oder zur Aussendung eines Messsignals aufweist, die zumindest teilweise das Antennenelement aufweist, das zu einem Empfangen des Fremdsignals vorgesehen ist. Dabei kann die Antenneneinheit ein monostatisches oder ein bistatisches Messsystem umfassen.

Vorteilhafterweise weist die Messvorrichtung eine Signalauskopplungseinheit auf, die zu einer Teilung eines empfangenen Signals der Antenneneinheit vorgesehen ist, wodurch eine vorteilhafte Weiterleitung des empfangenen Signals auf unterschiedliche Detektoren, insbesondere ein Impulssignaldetektor und/oder ein Dauersignaldetektor, und/oder Sensoren der Messeinheit erreicht werden kann. Die Signalauskopplungseinheit ist dabei vorzugsweise von einem Richtkoppler, einem Signalteiler, wie beispielsweise einem Wilkinsonteiler usw. gebildet.

Weist zudem die Signalauskopplungseinheit zumindest ein Schaltelement auf, kann damit vorteilhaft eine dauerhafte Schwächung eines Messsignals verhindert werden, indem ein empfangenes Signal für nur kurze Zeit innerhalb einer Messperiode geteilt oder auf einen weiteren Detektor geschaltet wird. Vorzugsweise ist das Schaltelement zu einer Signalteilung oder einer Signalumleitung eines empfangenen Signals zwischen der Messeinheit und der Dauersignaldetektoreinheit vorgesehen.

In einer vorteilhaften Weiterbildung der Erfindung wird vorgeschlagen, dass die Messvorrichtung eine Signalverarbeitungseinheit aufweist, die zu einer Einstellung eines Betriebsmodus der Messeinheit bei Vorliegen eines Fremdsignals der Fremdsignaleinheit vorgesehen ist, wodurch vorteilhaft ein Schutz eines aktiven Dienstes, beispielsweise einer Flugsicherung, und/oder der Messeinheit erreicht werden kann. Der Betriebsmodus kann dabei zu einer Reduzierung einer Leistung zumindest eines Teils eines Messspektrums der Messeinheit vorgesehen sein oder von einem Abschaltmodus gebildet sein. Der Abschaltmodus ist vorzugsweise zu einem automatischen Abschalten der Messeinheit bei Vorliegen des Fremdsignals vorgesehen.

Ist zudem der Betriebsmodus zu einer Änderung wenigstens einer Messfrequenz der Messeinheit vorgesehen, kann damit ein Messbetrieb der Messeinheit bei Vorliegen eines Fremdsignals vorteilhaft aufrechterhalten werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein schematischer Aufbau einer Messvorrichtung,
- Fig. 2: ein alternativer Aufbau der Messvorrichtung mit getrennten Detektoren in einer schematischen Darstellung,
- Fig. 3: ein alternativer Aufbau der Messvorrichtung mit autonomen Detektoren in einer schematischen Darstellung und
- Fig. 4: ein alternativer Aufbau der Messvorrichtung mit einstückig ausgebildeten Detektoren in einer schematischen Darstellung.

### Beschreibung der Ausführungsbeispiele

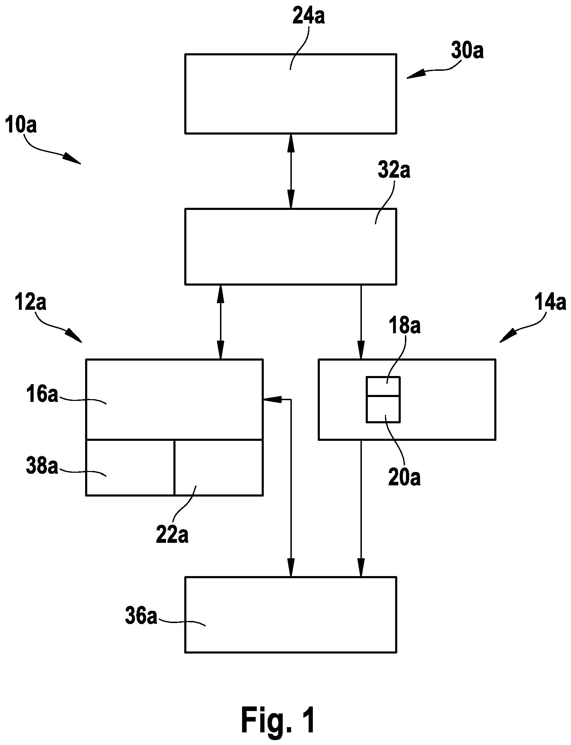

In Figur 1 ist eine von einer Ultrabreitbandmessvorrichtung gebildete Messvorrichtung 10a, die eine Messeinheit 12a und eine Fremdsignalerkennungseinheit 14a aufweist, für eine Werkzeugmaschine und/oder eine Handmessgerät dargestellt. Die Messeinheit 12a weist eine Ultrabreitbandeinheit 16a auf mit einem Sensorempfänger 22a, der von einem Ultrabreitbandsensorempfänger gebildet ist, und einem Ultrabreitbandsensorsender 38a auf. Zudem weist die Messeinheit 12a eine Antenneneinheit 30a auf, die zu einem Empfangen eines Ultrabreitbandradarsignals vorgesehen ist. Die Antenneneinheit 30a weist ein Antennenelement 24a der Fremdsignalerkennungseinheit 14a auf, das neben einem Aussenden und einem Empfangen eines Ultrabreitbandmesssignals der Ultrabreitbandeinheit 16a zu einem Empfangen eines Fremdsignals der Fremdsignalerkennungseinheit 14a während und/oder vor einer Messung der Messeinheit 14a vorgesehen ist. Das Empfangssignal des Antennenelements 24a wird auf eine Signalauskopplungseinheit 32a geleitet, die zu einer Teilung des von der Antenneneinheit 30a empfangenen Empfangssignals vorgesehen ist. Ein erster Teil des Empfangssignals wird zur Ultrabreitbandeinheit 16a der Messeinheit 12a geleitet, ein zweiter Teil des Empfangssignals wird zur Fremdsignalerkennungseinheit 14a geleitet.

Die Fremdsignalerkennungseinheit 14a weist einen Impulssignaldetektor 18a und einen Dauersignaldetektor 20a auf, die einstückig miteinander ausgebildet sind. Der Dauersignaldetektor 20a und der Impulssignaldetektor 18a sind dabei in einem Frequenzbereich selektiv, der im Wesentlichen gleich einem Frequenzbereich der Messeinheit 12a ist. Detektierte bzw. ausgewertete Daten der Fremdsignalerkennungseinheit 14a und der Messeinheit 12a werden an eine Signalverarbeitungseinheit 36a weitergeleitet, wobei ein Transport von Daten und/oder Signalen innerhalb der Messvorrichtung 10a mittels eines nicht näher dargestellten Datenbusses erfolgt. Grundsätzlich ist es jedoch auch denkbar, anstatt eines Datenbusses einen kabellosen bzw. drahtlosen Austausch von Daten und/oder Signalen zu ermöglichen und/oder einen Austausch mittels eines Datenkabels.

Im Betrieb der Messvorrichtung 10a wird diese von einem Bediener durch ein nicht dargestelltes Bedienelement aktiviert. Daraufhin werden mittels der Antenneneinheit 30a Empfangssignale empfangen, die über die Signalauskopplungseinheit 32a an die Fremdsignalerkennungseinheit 14a geleitet werden. Um einen eine erste Messung mittels der Messeinheit 12a zu starten, wird zunächst mittels der Fremdsignalerkennungseinheit 14a bzw. mittels der Dauersignalerkennungseinheit 20a innerhalb eines Zeitfensters von ca. 500 ms nach einem Dauerfremdsignal innerhalb des Empfangssignals detektiert. Innerhalb der Dauersignaldetektoreinheit 20a erfolgt eine Auswertung der Daten, wobei die Dauersignaldetektoreinheit 20a hierzu einen eigenen Prozessor aufweist und eine ausgewertete Kenngröße an die Signalverarbeitungseinheit 36a weitergeleitet wird. Grundsätzlich ist es jedoch auch denkbar, dass in der Signalverarbeitungseinheit 36a eine Auswertung der Daten erfolgt und die Dauersignaldetektoreinheit 20a die Daten der Antenneneinheit 30a lediglich an die Signalverarbeitungseinheit 36a weiterleitet. Die ausgewertete Kenngröße kann in Form einer digitalen oder einer analogen Kenngröße an die Signalverarbeitungseinheit 36a übermittelt werden.

Ein Dauerfremdsignal in der Dauersignaldetektoreinheit 20a liegt vor, wenn ein Signal größer ist als ein festgelegter Schwellenwert. Liegt in der Dauersignaldetektoreinheit 20a kein Fremdsignal vor bzw. die entsprechende Kenngröße in der Signalverarbeitungseinheit 36a, wird die Messeinheit 12a von der Signalverarbeitungseinheit 36a aktiviert und eine erste Messung kann gestartet werden. Dabei wird ein Messsignal mit einem Messspektrum von dem Ultrabreitbandsensorsender 38a der Ultrabreitbandeinheit 16a an die Signalauskopplungseinheit 32a von dieser weiter an die Antenneneinheit 30a geleitet und von dieser abgestrahlt. Das Messsignal wird an einem Messobjekt reflektiert und von der Antenneneinheit 30a empfangen und über die Signalauskopplungseinheit 32a an den Sensorempfänger 22a geführt und dort ausgewertet.

Gleichzeitig zu ersten Messung der Messeinheit 12a aktiviert die Signalverarbeitungseinheit 36a die Impulssignaldetektoreinheit 18a und diese beginnt mit einer Messung eines Impulsfremdsignals. Hierzu wird das von der Signalauskopplungseinheit 32a an die Impulssignaldetektoreinheit 18a geleitete Empfangssignal von einem Prozessor der Impulssignaldetektoreinheit 18a ausgewertet. Ein Impulsfremdsignal liegt vor, wenn ein Signal größer ist als ein Schwellenwert und dieser Schwellenwert von mehreren Signalen, wie beispielsweise von fünf Signalen, in Folge überschritten wurde. Liegt die Pulswiederholungsfrequenz bei etwa 700 Hz, wie beispielsweise im Bereich der Flugsicherung, müssen beispielsweise die fünf Signale bzw. Pulse innerhalb von 7,2 ms detektiert werden. Ist eine Anzahl der detektierten Pulse unter fünf, liegt kein Impulsfremdsignal vor. Aus den detektierten Pulsen ermittelt die Impulssignaldetektoreinheit 18a eine Kenngröße und leitet diese an die Signalverarbeitungseinheit 36a weiter.

Bei Vorliegen des Impulsfremdsignals und/oder des Dauerfremdsignals erfolgt über die Signalverarbeitungseinheit 32a eine Änderung eines Betriebsmodus der Ultrabreitbandeinheit 16a. Dieser Betriebsmodus ist von einem Abschaltmodus gebildet, der zu einem automatischen Abschalten des Ultrabreitbandsensorsenders 38a der Ultrabreitbandeinheit 16a bei Vorliegen eines Fremdsignals führt. Alternativ hierzu könnte der Betriebmodus auch zu einer Änderung einer Messfrequenz bzw. eines Messspektrums der Ultrabreitbandeinheit 16a und/oder zu einer Reduzierung einer Leistung der Ultrabreitbandeinheit 16a führen, so dass Beeinträchtigungen zwischen dem Fremdsignal und dem Messsignal zumindest reduziert oder ausgeschlossen werden können. Der Ultrabreitbandsensorsender 38a bzw. die Messeinheit 12a bleibt im Abschaltmodus zunächst für eine Periodendauer von mindestens 12 Sekunden abgeschaltet. Die Periodendauer entspricht dabei einer Periodendauer eines Radarsignals der Flugsicherung. Grundsätzlich ist es auch denkbar, die Periodendauer für die Impulsfremdsignaldetektion an weitere Störsignale bzw. Störquellen anzupassen. Erfolgt nach einer Periode eine erneute Messung eines Impulsfremdsignals, bleibt die Ultrabreitbandeinheit 16a für mindestens eine weitere Periodendauer abgeschaltet. Wird nach einer Periode kein Impulsfremdsignal detektiert, wird die Ultrabreitbandeinheit 16a von der Signalverarbeitungseinheit 36a, sofern kein Dauerfremdsignal vorliegt, automatisch wieder angeschaltet und ein Messbetrieb der Messeinheit 12a ist wiederhergestellt.

Neben der Erkennung bzw. Detektion eines Impulsfremdsignals erfolgt weiterhin die Detektion eines Dauerfremdsignals mittels der Dauersignaldetektoreinheit 20a. Nur wenn weder ein Impulsfremdsignal noch ein Dauerfremdsignal vorliegt, ist ein Messbetrieb der Messeinheit 12a möglich. Weist die Messeinheit 12a zudem eine optische Ausgabeeinheit auf, wie beispielsweise ein Display, kann ein aktueller Messstatus und/oder Fremdsignalerkennungsstatus für den Bediener der Messvorrichtung 10a ausgegeben werden. Des Weiteren ist es auch denkbar, dass spezielle Filter der Impulssignaldetektoreinheit 18a und/oder dem Dauersignaldetektoreinheit 20a vorgeschaltet sind, so dass nur spezielle Fremdsignale herausgefiltert bzw. erkannt werden können.

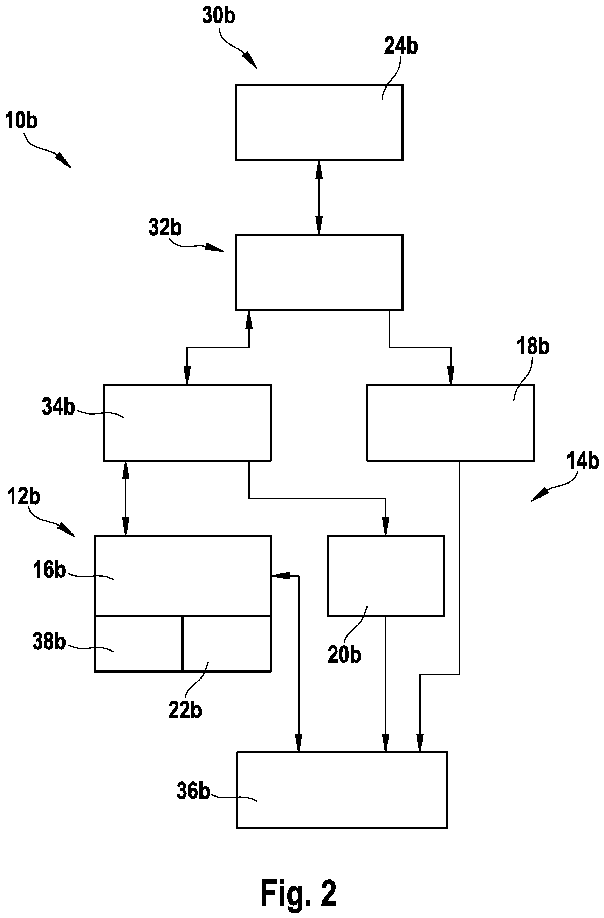

In den Figuren 2 bis 4 sind alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele die Buchstaben a bis d hinzugefügt. Die nachfolgende Beschreibung beschränkt sich im Wesentlichen auf die Unterschiede zu dem Ausführungsbeispiel in Figur 1, wobei bezüglich gleich bleibender Bauteile, Merkmale und Funktionen auf die Beschreibung des Ausführungsbeispiels in Figur 1 verwiesen werden kann.

In Figur 2 ist eine alternative Messvorrichtung 10b schematisch dargestellt. Die Messvorrichtung 10b weist eine Messeinheit 12b und eine Fremdsignalerkennungseinheit 14b auf. Die Fremdsignalerkennungseinheit 14b weist eine Dauersignaldetektoreinheit 20b und eine Fremdsignaldetektoreinheit 18b auf, die getrennt voneinander ausgebildet sind. Ein Empfangsignal eines Antennenelements 24b einer Antenneneinheit 30b wird auf eine Signalauskopplungseinheit 32b geführt und dort geteilt. Ein erster Teil des Empfangssignals wird an die Impulssignaldetektoreinheit 18b, ein zweiter Teil des Empfangssignals wird auf ein Schaltelement 34b der Signalauskopplungseinheit 32b geführt. Von dem Schaltelement 34b wird das Empfangssignal weiter auf die Dauersignaldetektoreinheit 20b bzw. auf die Messeinheit 12b geführt. Zur Erkennung eines Dauerfremdsignals reicht es aus, wenn innerhalb einer Periodendauer zur Erkennung eines Fremdsignals, beispielsweise zwölf Sekunden, in einem kleinen Zeitfensters, beispielsweise einige Hundert Millisekunden, das Empfangssignal mittels des Schaltelements 32b auf die Dauersignalerkennungseinheit 20b geführt wird. Für die restliche Periodendauer wird das Empfangssignal auf die Messeinheit 12b bzw. auf eine Ultrabreitbandeinheit 16b geführt, so dass eine Schwächung bzw. eine Dämpfung eines Messsignals möglichst verhindert ist. Eine Detektion von Dauerfremdsignalen und Impulsfremdsignalen durch die Fremdsignalerkennungseinheit 14b und eine Messung mittels der Messeinheit 12b erfolgen analog der Beschreibung zu der Figur 1.

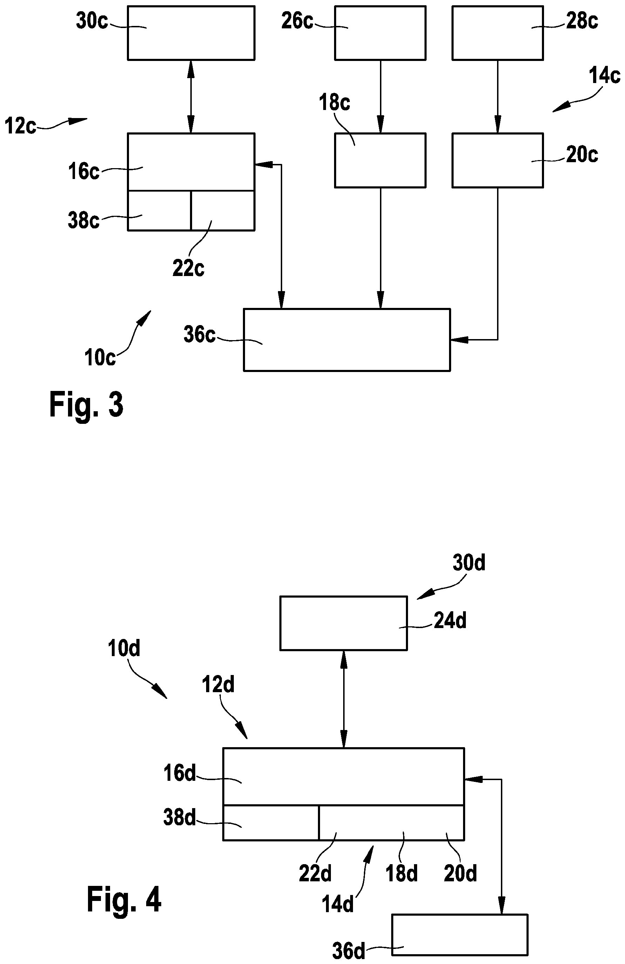

In Figur 3 ist eine alternative Messvorrichtung 10c schematisch dargestellt. Die Messvorrichtung 10c weist eine Messeinheit 12c und eine Fremdsignalerkennungseinheit 14c auf. Die Fremdsignalerkennungseinheit 14c weist eine Impulssignaldetektoreinheit 18c und eine Dauersignaldetektoreinheit 20c auf, die getrennt voneinander ausgebildet sind. Die Impulssignaldetektoreinheit 18c weist ein Antennenelement 26c auf, das getrennt von einem Antennenelement 28c der Dauersignaldetektoreinheit 20c ausgebildet ist. Zudem sind die beiden Antennenelement 26c, 28c getrennt von einer Antenneneinheit 30c der Messeinheit 12c ausgebildet. Eine Detektion von Dauerfremdsignalen und Impulsfremdsignalen durch die Fremdsignalerkennungseinheit 14c und eine Messung mittels der Messeinheit 12c erfolgen analog der Beschreibung zu der Figur 1. Grundsätzlich ist es in einer weiteren Ausgestaltung der Erfindung auch denkbar, dass das Antennenelement 26c der Impulssignaldetektoreinheit 18c und das Antennenelement 28c der Dauersignaldetektoreinheit 20c einstückig miteinander ausgebildet sind, so dass mittels eines Antennenelements 26c, 28c beide Fremdsignale bzw. beide Fremdsignaltypen empfangen werden können.

In Figur 4 ist eine alternative Messvorrichtung 10d schematisch dargestellt. Die Messvorrichtung 10d weist eine Messeinheit 12d und eine Fremdsignalerkennungseinheit 14d auf, die einstückig miteinander ausgebildet sind. Ein Sensorempfänger 22d einer Ultrabreitbandeinheit 16d der Messeinheit 12d ist dabei als eine Dauersignaldetektoreinheit 20d und als eine Impulssignaldetektoreinheit 18d ausgebildet. Dabei ist die Ultrabreitbandeinheit 16d bzw. der Sensorempfänger 22d zu einer Detektion von einem Messspektrum, einem Dauerfremdsignal und einem Impulsfremdsignal vorgesehen. In einer weiteren Ausgestaltung der Erfindung ist es zudem auch denkbar, dass der Sensorempfänger 22d der Ultrabreitbandeinheit 16d mit nur der Dauersignalerkennungseinheit 20d oder der Impulssignalerkennungseinheit 18d einstückig ausgebildet ist. Eine Detektion von Dauerfremdsignalen und Impulsfremdsignalen durch die Fremdsignalerkennungseinheit 14d und eine Messung mittels der Messeinheit 12d erfolgen analog der Beschreibung zu den Figuren 1 und 2.

## Patentansprüche

1. Messvorrichtung für eine Werkzeugmaschine und/oder ein Handmessgerät mit einer Messeinheit (12a-d), die zu einer Messung eingerichtet ist und zum Empfangen eines Ultrabreitbandradarsignals eine Antenneneinheit aufweist, und einer Fremdsignalerkennungseinheit (14a-d), die zu einer Erkennung eines Fremdsignals zumindest während einer Messung der Messeinheit (12a-d) eingerichtet ist, wobei, die Fremdsignalerkennungseinheit (14a-d) zumindest eine Impulssignaldetektoreinheit (18a-d) aufweist, die zu einer Detektion von Impulsfremdsignalen eingerichtet ist, **dadurch gekennzeichnet, dass** die Fremdsignalerkennungseinheit (14a-d) zumindest eine Dauersignaldetektoreinheit (20a-d) aufweist, die zu einer Detektion von Dauerfremdsignalen eingerichtet ist, wobei die Fremdsignalerkennungseinheit (14a-d) zumindest ein Antennenelement (24a; 24b; 26c; 28c; 24d) aufweist, das zum Empfangen des Fremdsignals eingerichtet ist, sodass das Fremdsignal unabhängig von der Messeinheit empfangen wird.

2. Messvorrichtung nach Anspruch 1, **dadurch gekennzeichnet, dass** die Messeinheit (12ä-d) eine Ultrabreitbandeinheit (16a-d) aufweist, die zu einer Ultrabreitbandmessung eingerichtet ist.

3. Messvorrichtung zumindest nach Anspruch 1, **dadurch gekennzeichnet, dass** die Messeinheit (12d) zumindest einen Sensorempfänger (22d) aufweist, der zumindest teilweise einstückig mit der Impuls-signaldetektoreinheit (18d) ausgebildet sind.

4. Messvorrichtung zumindest nach Anspruch 1, **dadurch gekennzeichnet, dass** die Messeinheit (12d) zumindest einen Sensorempfänger (22d) aufweist, der zumindest teilweise einstückig mit der Dauer-signaldetektoreinheit (20d) ausgebildet ist.

5. Messvorrichtung zumindest nach Anspruch 1, **dadurch gekennzeichnet, dass** die Impulssignaldetektoreinheit (18c) das Antennenelement (26c) aufweist.

6. Messvorrichtung zumindest nach Anspruch 1, **dadurch gekennzeichnet, dass** die Dauersignaldetektoreinheit (20c) das Antennenelement (28c) aufweist.

7. Messvorrichtung zumindest nach Anspruch 5 und 6, **dadurch gekennzeichnet, dass** das Antennenelement (26c) der Impulssignaldetektoreinheit (18c) und das Antennenelement (28c) der Dauersignaldetektoreinheit (20c) zumindest teilweise einstückig miteinander ausgebildet sind.

8. Messvorrichtung zumindest nach Anspruch 1, **dadurch gekennzeichnet, dass** die Messeinheit (12a; 12b; 12d) eine Antenneneinheit (30a; 30b; 30d) zum Empfangen und/oder zur Aussendung eines Messsignals aufweist, die zumindest teilweise das Antennenelement (24a; 24b; 24d) aufweist, das zu einem Empfangen des Fremdsignals eingerichtet ist.

9. Messvorrichtung zumindest nach Anspruch 8, **gekennzeichnet durch** eine Signalauskopplungseinheit (32a; 32b), die zu einer Teilung eines empfangenen Signals der Antenneneinheit (30a; 30b) eingerichtet ist.

10. Messvorrichtung zumindest nach Anspruch 9, **dadurch gekennzeichnet, dass** die Signalauskopplungseinheit (32b) zumindest ein Schaltelement (34b) aufweist.

11. Messvorrichtung nach einem der vorhergehenden Ansprüche, **gekennzeichnet durch** eine Signalverarbeitungseinheit (36a-d), die zu einer Einstellung eines Betriebsmodus der Messeinheit (12) bei Vorliegen eines Fremdsignals der Fremdsignaleinheit (14a-d) eingerichtet ist.

12. Messvorrichtung zumindest nach Anspruch 11, **dadurch gekennzeichnet, dass** zumindest ein Betriebsmodus zu einer Reduzierung einer Leistung zumindest eines Teils eines Messspektrums der Messeinheit (12a-d) eingerichtet ist.

13. Messvorrichtung zumindest nach Anspruch 12, **dadurch gekennzeichnet, dass** zumindest ein Betriebsmodus von einem Abschaltmodus der Messeinheit (12a-d) gebildet ist.

14. Messvorrichtung zumindest nach Anspruch 11, **dadurch gekennzeichnet, dass** zumindest ein Betriebsmodus zu einer Änderung wenigstens einer Messfrequenz der Messeinheit (12a-d) eingerichtet ist.

15. Verfahren für eine Messung mit einer Messvorrichtung (10a-d) nach einem der Ansprüche 1 bis 14, **dadurch gekennzeichnet, dass** während der Messung eine Fremdsignalerkennung durchgeführt wird.

16. Verfahren nach Anspruch 15, **dadurch gekennzeichnet, dass** zur Fremdsignalerkennung zumindest ein Impulsfremdsignal detektiert wird.

17. Verfahren nach Anspruch 15 oder 16, **dadurch gekennzeichnet, dass** zur Fremdsignalerkennung Dauerfremdsignale detektiert werden.

18. Verfahren nach einem der Ansprüche 15 bis 17, **dadurch gekennzeichnet, dass** bei einem Vorliegen eines Fremdsignals ein Betriebsmodus für die Messung geändert wird.

## Claims

1. Measuring apparatus for a machine tool and/or a handheld measuring device having a measuring unit (12a-d) which is set up for a measurement and has an antenna unit for receiving an ultra-wideband radar signal, and having an external signal detection unit (14a-d) which is set up to detect an external signal at least during a measurement of the measuring unit (12a-d), the external signal detection unit (14a-d) having at least one pulse signal detector unit (18a-d) which is set up to detect external pulse signals, **characterized in that** the external signal detection unit (14a-d) has at least one permanent signal detector unit (20a-d) which is set up to detect permanent external signals, the external signal detection unit (14a-d) having at least one antenna element (24a; 24b; 26c; 28c; 24d) which is set up to receive the external signal, with the result that the external signal is received independently by the measuring unit.

2. Measuring apparatus according to Claim 1, **characterized in that** the measuring unit (12a-d) has an ultra-wideband unit (16a-d) which is set up for an ultra-wideband measurement.

3. Measuring apparatus at least according to Claim 1, **characterized in that** the measuring unit (12d) has at least one sensor receiver (22d) which is at least partially formed in one piece with the pulse signal detector unit (18d).

4. Measuring apparatus at least according to Claim 1, **characterized in that** the measuring unit (12d) has at least one sensor receiver (22d) which is at least partially formed in one piece with the permanent signal detector unit (20d).

5. Measuring apparatus at least according to Claim 1, **characterized in that** the pulse signal detector unit (18c) has the antenna element (26c).

6. Measuring apparatus at least according to Claim 1, **characterized in that** the permanent signal detector unit (20c) has the antenna element (28c).

7. Measuring apparatus at least according to Claims 5 and 6, **characterized in that** the antenna element (26c) of the pulse signal detector unit (18c) and the antenna element (28c) of the permanent signal detector unit (20c) are at least partially formed in one piece with one another.

8. Measuring apparatus at least according to Claim 1, **characterized in that** the measuring unit (12a; 12b; 12d) has an antenna unit (30a; 30b; 30d) for receiving and/or emitting a measurement signal, which antenna unit at least partially has the antenna element (24a; 24b; 24d) which is set up to receive the external signal.

9. Measuring apparatus at least according to Claim 8, **characterized by** a signal output unit (32a; 32b) which is set up to divide a received signal from the antenna unit (30a; 30b).

10. Measuring apparatus at least according to Claim 9, **characterized in that** the signal output unit (32b) has at least one switching element (34b).

11. Measuring apparatus according to one of the preceding claims, **characterized by** a signal processing unit (36a-d) which is set up to set an operating mode of the measuring unit (12) if there is an external signal from the external signal unit (14a-d).

12. Measuring apparatus at least according to Claim 11, **characterized in that** at least one operating mode is set up to reduce a power of at least one part of a measuring spectrum of the measuring unit (12a-d).

13. Measuring apparatus at least according to Claim 12, **characterized in that** at least one operating mode is formed by a shutdown mode of the measuring unit (12a-d).

14. Measuring apparatus at least according to Claim 11, **characterized in that** at least one operating mode is set up to change at least one measuring frequency of the measuring unit (12a-d).

15. Method for a measurement using a measuring apparatus (10a-d) according to one of Claims 1 to 14, **characterized in that** external signal detection is carried out during the measurement.

16. Method according to Claim 15, **characterized in that** at least one external pulse signal is detected for external signal detection.

17. Method according to Claim 15 or 16, **characterized in that** permanent external signals are detected for external signal detection.

18. Method according to one of Claims 15 to 17, **characterized in that** an operating mode for the measurement is changed if an external signal is present.

## Revendications

1. Dispositif de mesure pour une machine-outil et/ou un instrument de mesure manuel comprenant une unité de mesure (12a-d), laquelle est conçue pour une mesure et possède une unité d'antenne pour recevoir un signal radar à bande ultra-large, et une unité de reconnaissance de signal externe (14a-d), laquelle est conçue pour reconnaître un signal externe au moins pendant une mesure de l'unité de mesure (12a-d), l'unité de reconnaissance de signal externe (14a-d) possédant au moins une unité de détection de signal impulsionnel (18a-d) qui est conçue pour une détection de signaux externes impulsionnels, **caractérisé en ce que** l'unité de reconnaissance de signal externe (14a-d) possède au moins une unité de détection de signal continu (20a-d), laquelle est conçue pour une détection de signaux externes continus, l'unité de reconnaissance de signal externe (14a-d) possédant au moins un élément d'antenne (24a ; 24b ; 26c ; 28c ; 24d) qui est conçu pour recevoir le signal externe, de sorte que le signal externe est reçu indépendamment de l'unité de mesure.

2. Dispositif de mesure selon la revendication 1, **caractérisé en ce que** l'unité de mesure (12a-d) possède une unité de mesure à bande ultra-large (16a-d) qui est conçue pour une mesure en bande ultra-large.

3. Dispositif de mesure au moins selon la revendication 1, **caractérisé en ce que** l'unité de mesure (12d) possède au moins un récepteur de détection (22d), lequel est réalisé au moins partiellement d'un seul tenant avec l'unité de détection de signal impulsionnel (18d).

4. Dispositif de mesure au moins selon la revendication 1, **caractérisé en ce que** l'unité de mesure (12d) possède au moins un récepteur de détection (22d), lequel est réalisé au moins partiellement d'un seul tenant avec l'unité de détection de signal continu (20d).

5. Dispositif de mesure au moins selon la revendication 1, **caractérisé en ce que** l'unité de détection de signal impulsionnel (18c) possède l'élément d'antenne (26c).

6. Dispositif de mesure au moins selon la revendication 1, **caractérisé en ce que** l'unité de détection de signal continu (20c) possède l'élément d'antenne (28c).

7. Dispositif de mesure au moins selon les revendications 5 et 6, **caractérisé en ce que** l'élément d'antenne (26c) de l'unité de détection de signal impulsionnel (18c) et l'élément d'antenne (28c) de l'unité de détection de signal continu (20c) sont au moins partiellement réalisées d'un seul tenant l'un avec l'autre.

8. Dispositif de mesure au moins selon la revendication 1, **caractérisé en ce que** l'unité de mesure (12a ; 12b ; 12c) possède une unité d'antenne (30a ; 30b ; 30d) destinée à recevoir et/ou à émettre un signal de mesure, laquelle possède au moins partiellement l'élément d'antenne (24a ; 24b ; 24d), lequel est conçu pour une réception du signal externe.

9. Dispositif de mesure au moins selon la revendication 8, **caractérisé par** une unité d'extraction de signal (32a ; 32b) qui est conçue pour une division d'un signal reçu de l'unité d'antenne (30a ; 30b).

10. Dispositif de mesure au moins selon la revendication 9, **caractérisé en ce que** l'unité d'extraction de signal (32b) possède au moins un élément de commutation (34b).

11. Dispositif de mesure selon l'une des revendications précédentes, **caractérisé par** une unité de traitement de signal (36a-d), laquelle est conçue pour un réglage d'un mode de fonctionnement de l'unité de mesure (12) en présence d'un signal externe de l'unité à signal externe (14a-d).

12. Dispositif de mesure au moins selon la revendication 11, **caractérisé en ce qu'**au moins un mode de fonctionnement est conçu pour une réduction d'une puissance d'au moins une partie d'un spectre de mesure de l'unité de mesure (12a-d).

13. Dispositif de mesure au moins selon la revendication 12, **caractérisé en ce qu'**au moins un mode de fonctionnement est formé par un mode de déconnexion de l'unité de mesure (12a-d).

14. Dispositif de mesure au moins selon la revendication 11, **caractérisé en ce qu'**au moins un mode de fonctionnement est conçu pour une modification d'au moins une fréquence de mesure de l'unité de mesure (12a-d).

15. Procédé pour une mesure avec un dispositif de mesure (10a-d) selon l'une des revendications 1 à 14, **caractérisé en ce qu'**une reconnaissance de signal externe est effectuée pendant la mesure.

16. Procédé selon la revendication 15, **caractérisé en ce qu'**au moins un signal externe impulsionnel est détecté en vue de la reconnaissance de signal externe.

17. Procédé selon la revendication 15 ou 16, **caractérisé en ce que** des signaux externes continus sont détectés en vue de la reconnaissance de signal externe.

18. Procédé selon l'une des revendications 15 à 17, **caractérisé en ce qu'**un mode de fonctionnement pour la mesure est modifié en présence d'un signal externe.
